# EUROPEAN PATENT SPECIFICATION

(11) **EP 1 943 932 B1**
(45) Date of publication and mention of the grant of the patent: **15.09.2010**
(21) Application number: 08000421.1
(22) Date of filing: 10.01.2008
(51) Int. Cl.: A47J 43/24, A23B 7/158

(54) **Household appliance for sanitizing foods**
Haushaltsgerät zum Sterilisierung von Nahrungsmitteln
Appareil domestique pour la stérilisation des aliments

(30) Priority: 11.01.2007 IT VI20070010
(43) Date of publication of application: 16.07.2008
(73) Proprietor: GIORGIA S.r.l., 30030 Vigonovo (VE) (IT)
(72) Inventor: Ballin, Bruno, 30032 Fiesso d'Artico (Venezia) (IT); Caon, Roberto, 35010 Vigonza (Padova) (IT)
(74) Representative: Maroscia, Antonio

(56) References cited:
- US-A- 5 113 881
- US-A1- 2002 166 578
- US-A1- 2006 078 661

## Description

### Field of the Invention

The present invention generally finds application in the field of food treatment and preservation, and particularly relates to a household appliance for food sanitization.

### Background Art

A number of household devices are currently available for removal of impurities from food and later sterilization, which use strictly physical processes in view of avoiding the use of chemicals that might somehow alter organoleptic properties.

In this respect, ultrasounds are known to be used to generate high-energy pressure waves whereby impurities, such as soil residues or dust can be removed from the surface of food.

Devices are further known for disinfection or sterilization of food, or even various items such as dishes, glasses, infant products or medical devices, by producing ozone and blowing it into the washing liquid or directly into the air.

US 5,927,304 discloses a household appliance for washing food, which is composed of an external container in which washing liquid is poured, and an internal rotating metal basket for holding the food to be washed.

One or more sources of sonic or supersonic waves are provided on the inner wall of the container, to generate such vibrations in the liquid as to urge liquid into the interstices in the food and remove the impurities deposited thereon, without using brushes or similar contact cleaning devices that might damage the food.

Also, a UV radiation source is provided in the container, ensuring a germicidal and antibacterial effect to sterilize the food that can be later removed while still being held in the basked.

While this household appliance ensures both impurity removal and food sterilization, it still suffers from the apparent drawback that, even after sterilization and until removal from the basket, the food is held in a liquid that contains the removed impurities, and is thus susceptible of being contaminated again.

In an attempt to obviate the above drawbacks, several household appliance solutions have been proposed, in which liquid is discharged in an automatic or controlled manner at the end of the washing and/or sterilization steps.

US2006/078661 discloses a sterilization machine for fruits and vegetables which additionally features a device under the rotating basket, for draining the washing liquid both after the ultrasonic cleaning step and at the end of the whole food sanitization cycle.

US 5113881 also discloses a device for ultrasonic cleaning of fruit and vegetables, which device comprising a cleaning tank with a rotatable basket for the product to be washed, an inlet for water supply and an outlet for water discharge.

The device is also provided with ultrasonic washing means for vibrationally removing particle impurities from the food immersed in the liquid.

Nevertheless, while the above solution ensures food sterility at the end of the cycle, new clean liquid must be reintroduced in the container after each washing liquid discharge step, for the subsequent steps. Therefore, the sanitization cycle cannot be completely automated.

### Summary of the invention

The object of the present invention is to overcome the above drawbacks, by providing a household appliance for food sanitization that is highly efficient and relatively cost-effective.

A particular object is to provide a household appliance for food sanitization that allows food sterilization to occur with food immersed in clean liquid, which prevents the pollutants removed from food from contaminating it again even after removal and after the sterilization step.

A further object is to provide a household appliance that allows simple and automatic drainage of the spent washing liquid and the sterilization liquid, without requiring any user action.

Yet another object of the invention is to provide a household appliance that can execute the whole sanitizing-drying-discharging cycle in a fully automatic fashion after introduction of the washing and sterilization liquids, without requiring any user action in any step of the cycle.

Another important object of the invention is to provide a household appliance for food sanitization that has a compact size and low space requirements.

These and other objects, as better explained hereafter, are fulfilled by a household appliance for food sanitization in accordance with claim 1, comprising a container that defines an open top sanitizing chamber for receiving the food to be treated and a washing liquid, washing means for vibrationally removing particle impurities from the food immersed in the liquid, sterilization means for reducing microbial counts present on food after washing, discharge means for discharging the spent washing liquid from the sanitizing chamber.

According to the invention, the sterilization means include a separate tank for collecting the clean sterilization liquid, which liquid is designed to be automatically fed into the sanitizing chamber only when the initial washing step is completed and the spent washing liquid is automatically drained.

Thanks to this particular arrangement, the washing liquid with the impurities removed from the surface of food may be drained off before being fed into the container of the sterilization liquid, so that the sterilization step may be carried out with the food immersed in a clean liquid.

This will provide almost complete food sterilization, while preventing the pollutants removed from the food from depositing thereon again, and from causing further contamination, even after the sterilization step.

Preferably, transfer means may be provided, for transferring the clean sterilization liquid into the sanitizing chamber.

Furthermore, the discharge means may include a hydraulic circuit and a solenoid valve for selectively and automatically opening/closing such circuit.

Thus, the sterilization and washing liquids may be both loaded at the start of the sanitization cycle and may be unloaded automatically without requiring any user action.

Furthermore, the control means may include a microprocessor unit with a computer program installed thereon for enabling/disabling the transfer means, the fluid connection means, the washing means and the sterilization means in a programmed manner.

Thanks to this additional features, the household appliance may follow the whole food sanitizing and drying cycle in a wholly automatic manner without requiring the presence of the user to select the various steps.

### Brief description of the drawings

Further characteristics and advantages of the invention will be more apparent from the detailed description of a preferred, non-exclusive embodiment of a household appliance for food sanitization according to the invention, which is described by way of a nonlimiting example with the assistance of the annexed drawings, in which:

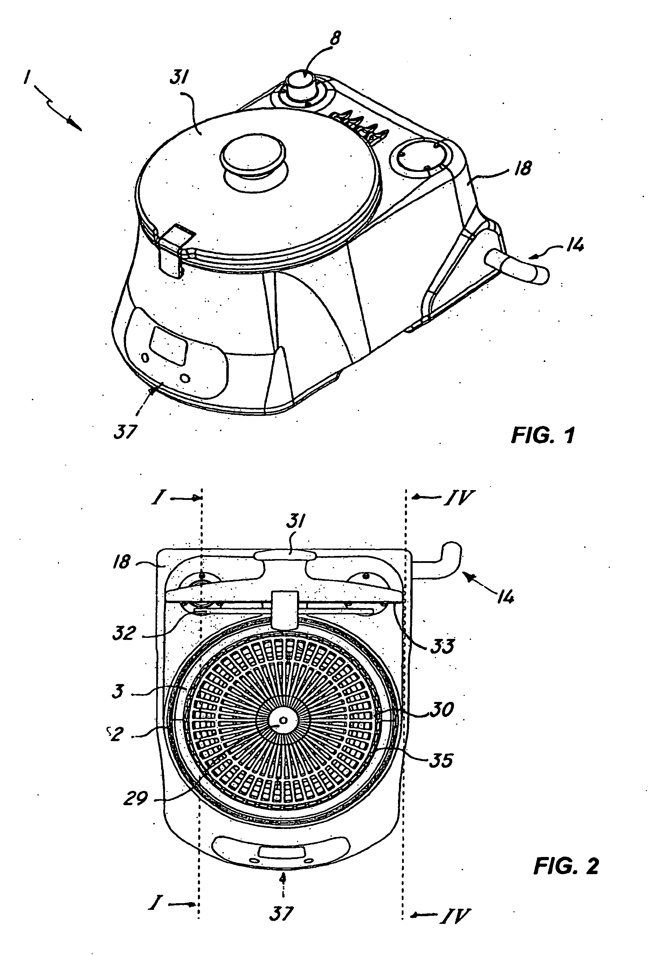

FIG. 1 is a perspective view of a household appliance according to the invention;
FIG. 2 is a top view of the household appliance of FIG. 1;
FIG. 3 is an exploded view of the household appliance of FIG. 1;
FIG. 4 is a first sectional view of the household appliance as taken along the plane *I-I* of FIG. 6;
FIG. 5 is a second sectional view of the household appliance as taken along the plane *II-II* of FIG. 4;
FIG. 6 is a third sectional view of the household appliance as taken along the plane III-III of FIG. 4;
FIG. 7 is a fourth sectional view of the household appliance as taken along the plane *IV-IV* of FIG. 2.

### Best Mode of Carrying out the Invention

Referring to the above figures, the household appliance for food sanitization, generally designated by numeral 1, may be used for removing impurities, such as soil residues, dust particles or other pollutants from the surface of food, particularly fruits and vegetables, and for later sterilization thereof by destruction of microbial counts and disinfection of the sterilization liquid.

The household appliance 1 may also be used for washing and sterilization of items such as dishware, infant products or the like.

The household appliance of the invention comprises a container 2 that defines an open top sanitizing chamber 3 for receiving the food to be treated and a washing liquid, washing means 4 for vibrationally removing particle impurities from the food immersed in the liquid, sterilization means 5 for reducing microbial counts on the washed food, discharge means 6 for draining the spent washing liquid out of the sanitizing chamber 3.

The sterilization means 5 include a separate and independent tank 7 for collecting the clean sterilization liquid, that is designed to be automatically fed into the sanitizing chamber 3 only when the initial washing step is completed and the spent washing liquid is automatically drained.

By this arrangement, the sterilization step may be carried out with a clean liquid, that can be preventively fed into the tank 7, through its reclosable open top 8, even before the start of the washing step by the washing means 4.

The liquid contained in the sanitizing chamber 3 during both the washing step and the sterilization step may be water, such as water directly supplied by the water mains and manually loaded both into the sanitizing chamber 3 and into the tank 7.

Advantageously, transfer means 9 may be provided, for transferring the clean sterilization liquid from the tank 7 into the sanitizing chamber 3.

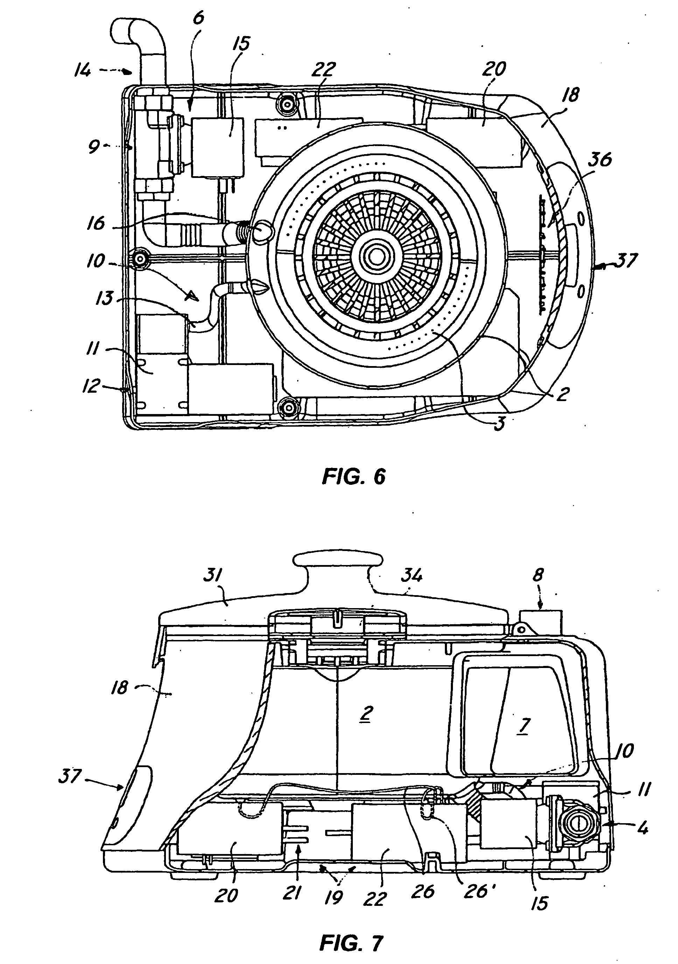

As shown from the section of FIG. 6, the transfer means 9 may include a first hydraulic circuit 10 having a first pump 11 with a suction pipe 12 in communication with the tank 7 and a delivery pipe 13 connected to the sanitizing chamber 3.

In the preferred, non exclusive configuration of the invention as shown in the figures, the discharge means 6 may include a second hydraulic circuit 14 to put the sanitizing chamber 3 in fluid communication with the outside.

The second hydraulic circuit 14 may be controlled by a solenoid valve 15 which will cause it to selectively and automatically open and close, so that the second circuit 14 can be opened at the end of the washing step and the spent washing liquid can fall by gravity out of the sanitizing chamber 3 through the outlet 16 formed on the bottom thereof.

The second discharge circuit 14 may be similarly used to discharge the liquid used during the sterilization step from the sanitizing chamber 3.

Both the transfer means 9 and the discharge means 6 may be automatically controlled by suitable control means 36, which can only actuate the first pump 11 when the spent washing liquid has been completely drained out.

For the food in the sanitizing chamber 3 to be almost fully immersed in the liquid, while being prevented from overflowing out of the sanitizing chamber 3, the tank 7 may have a predetermined capacity smaller than the capacity of the sanitizing chamber 3 and preferably of about 2 liters.

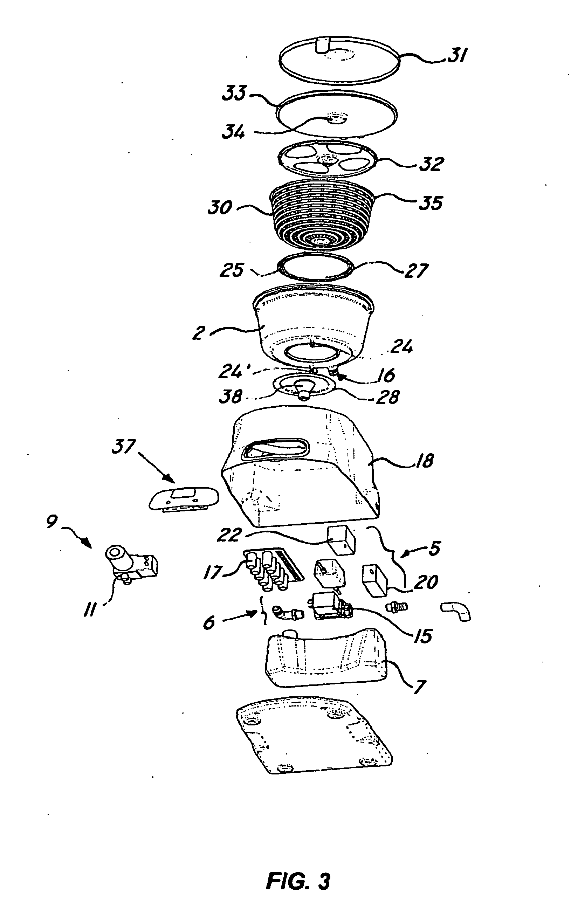

As shown by the exploded view of FIG. 3, the washing means 4 may include a sonic frequency generator 17 which is designed to generate sonic waves in the sanitizing chamber 3, by exciting the conical frequency transducer 38.

The waves will preferably have a frequency in a range of ultrasonic frequencies. According to a preferred, non exclusive configuration, the frequency may be of about 40 kHz on average, although 5% oscillations will be allowed around the average value.

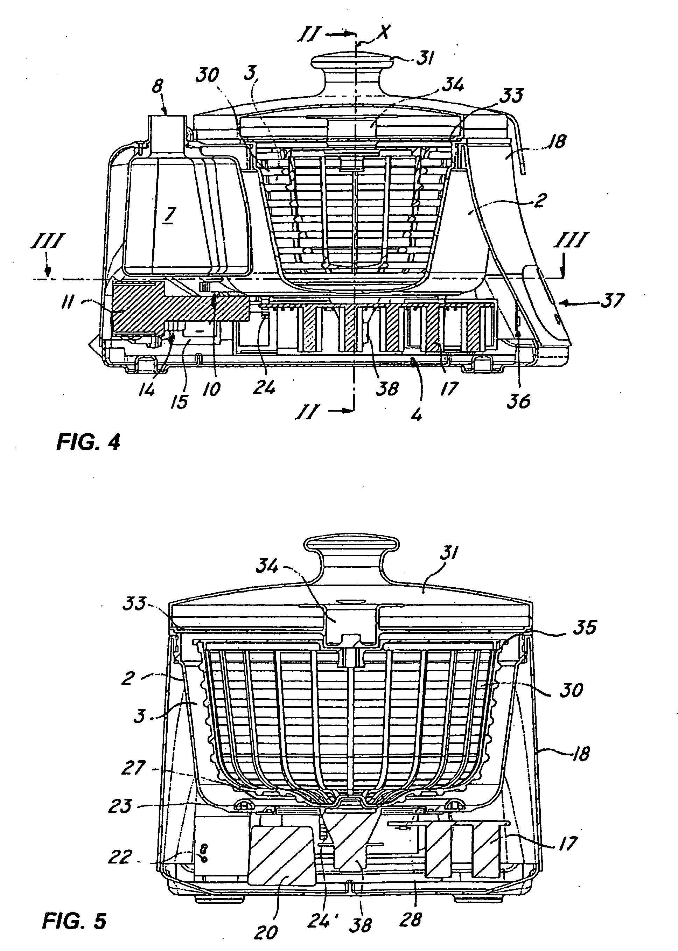

As shown by the sectional view of FIG. 4, the first pump 11, the solenoid valve 15 and the transducer 17 may be all located below and outside the tank 7 and the container 2, and may be contained in an external protective enclosure 18, for overall size reduction and higher compactness of the household appliance 1.

The sterilization means 5 may include a third circuit 19 for forced feed of a sterilizing fluid into the sanitizing chamber 3. Preferably, the sterilizing fluid may be ozonized air and the third circuit 19 may include a second pump 20 for drawing in air from outside, whose delivery pipe 21 is connected to an ozone generator 22, that defines an ozonizing chamber.

The ozone generator 22 may be a step-up transformer adapted to generate a high frequency and high voltage electric arc in the air sucked in by the second pump 20 and fed into the ozonizing chamber.

The latter may be in fluid communication with a substantially annular diffusion chamber 23 disposed below the sanitizing chamber 3 and having a first series of holes 24 in fluid connection with the ozonizing chamber for drawing in ozonized air therefrom and a second series of communicating through holes 25 opening into the sanitizing chamber 3 for feeding ozonized air therein.

FIG. 7 shows that the ozone generator 22 may have two or even more or less than two outlet pipes 26, 26', which can be fitted into the holes 24, 24' of the first series formed in the bottom of the container 2, to achieve a more even distribution of ozonized air within the diffusion chamber 23.

The latter may be defined by a ring 27 with the second series of holes 25 formed therein, mounted at the periphery of a disk-shaped plate 28 that defines the bottom of the container 2.

The plate 28 may have its upper face 29 at least partly coated with a layer of a material containing silver nanoparticles so that, when it is immersed in the liquid, it can release positive silver ions which are known to have antibacterial and germicidal properties.

In addition, a perforated basket 30 may be rotatably and removably mounted in the sanitizing chamber 3, for holding the food in the sanitizing chamber 3 during the whole sanitization cycle, and for simpler removal of sanitized food at the end of the cycle.

The external enclosure 18 may in turn have a laterally hinged upper lid 31 for hermetic sealing of the sanitizing chamber 3. The lid 31 may have a motor-driven disk 33 on its inner face, which is designed to be driven by a motor 34 and to fit onto the upper edge 35 of the basket 30 to drive it into rotation about a substantially vertical axis X and facilitate removal of any residual liquid from the food.

Furthermore, an additional disk 32 may be provided on the cover 31 to hold the products introduced in the sanitizing chamber 3 fully immersed in the liquid.

Thus, at the end of the sanitization cycle and after drainage of the sterilization liquid, the food may be dried and the residual liquid removed therefrom and collected on the bottom of the container 2 may be drained through the second hydraulic circuit 14.

According to a further configuration, not shown in the figures, the sterilization means may include, instead of or in addition to the ozone generator 22, a UV ray generator, possibly located under the lid and facing towards the open top of the sanitizing chamber 3.

The control means 36 may also control the rotation of the basket 30 and sequentially enable/disable the washing means 4 and the sterilization means 5.

The control means 36 may include a microprocessor unit with a computer program installed therein for selecting one or more different operating cycles for the household appliance, which can be preset in the memory of the microprocessor.

For this purpose, they may include display means 37, including a push-button panel and a monitor, which externally fixed to the enclosure 18 for quick and direct selection of a particular operating cycle of the appliance 1, such as washing only, sterilization only or complete sanitizing cycles.

The above disclosure clearly shows that the invention fulfils the intended objects, and particularly meets the requirement of providing a household appliance for food sanitization that can carry out a food washing-sterilizing-drying cycle in a fully automatic manner and without requiring any action by the user, once the washing and sterilization liquids have been loaded.

Thanks to its particular configuration, food sterilization occurs in clean liquid and after disposal of vibrationally removed impurities, thereby preventing the latter from contaminating food again.

The household appliance of the invention is susceptible of a number of changes and variants, within the inventive principle disclosed in the appended claims. All the details thereof may be replaced by other technically equivalent parts, and the materials may vary depending on different needs, without departure from the scope of the invention.

While the household appliance has been described with particular reference to the accompanying figures, the numerals referred to in the disclosure and claims are only used for the sake of a better intelligibility of the invention and shall not be intended to limit the claimed scope in any manner.

## Claims

1. A household appliance for sanitizing foods, comprising:
- a container (2) that defines an open top sanitizing chamber (3) for receiving food to be treated and a washing liquid;
- washing means (4) for vibrationally removing particle impurities from the food immersed in the liquid;
- sterilization means (5) for reducing microbial counts present on food after washing;
- discharge means (6) draining off the spent washing liquid from the sanitizing chamber (3), **characterized in that** said sterilization means (5) include a separate tank (7) for collecting the clean sterilization liquid, that is designed to be automatically fed into said sanitizing chamber (3) only when the initial washing step is completed and the spent washing liquid is automatically drained, to allow the sterilization step to be only carried out with clean liquid.

2. Household appliance as claimed in claim 1, **characterized in that** it comprises transfer means (9), for transferring the clean sterilization liquid into said sanitizing chamber (3).

3. Household appliance as claimed in claim 2, characterize in that said transfer means (9) include a first hydraulic circuit (10) having a first pump (11) with a suction pipe (12) in communication with said tank (7) and a delivery pipe (13) connected to said sanitizing chamber (3).

4. Household appliance as claimed in claim 2, **characterized in that** it comprises control means (36) for automatically controlling both the actuation of said discharge means (6) and the actuation of said transfer means (9) only when the spent washing liquid has been completely drained out of said sanitizing chamber (3).

5. Household appliance as claimed in claim 1, **characterized in that** said tank 7 has a predetermined capacity smaller than the capacity of said sanitizing chamber (3) and preferably of about 2 liters.

6. Household appliance as claimed in claim 1, **characterized in that** said discharge means (6) include a second hydraulic circuit (14) with a solenoid valve (15) for selectively and automatically opening/closing said second circuit (14).

7. Household appliance as claimed in claim 1, **characterized in that** said washing means (4) include a frequency generator (17) located outside said sanitizing chamber (3) for generating therein sonic waves of predetermined frequency.

8. Household appliance as claimed in claim 7, **characterized in that** said predetermined frequency is selected from the range of ultrasonic frequencies and is preferably of about 40 kHz.

9. Household appliance as claimed in claim 1, **characterized in that** said sterilization means (5) include a third circuit (19) for forcedly feeding a sterilizing fluid into said sanitizing chamber (3).

10. Household appliance as claimed in claim 9, **characterized in that** said sterilizing fluid is ozonized air, said third circuit (19) comprising a second pump (20) for drawing in air from the outside environment and an ozone generator (22) connected to the delivery side of said second pump (20).

11. Household appliance as claimed in claim 10, **characterized in that** said ozone generator (22) defines an ozonizing chamber, which is in fluid communication with said sanitizing chamber (3).

12. Household appliance as claimed in claim 11, **characterized in that** said ozone generator (22) is a step-up transformer adapted to generate a high frequency and high voltage electric arc in the air within said ozonizing chamber.

13. Household appliance as claimed in claim 11, **characterized in that** said third circuit (19) comprises a substantially annular diffusion chamber (23) disposed below said sanitizing chamber (3), said diffusion chamber (23) having a first series of holes (24) in fluid connection with said ozonizing chamber for drawing in ozonized air therefrom and a second series of through holes (25) formed in said sanitizing chamber (3) for forcedly feeding ozonized air therein.

14. Household appliance as claimed in any one of the preceding claims, **characterized in that** said sterilization means include a UV ray generator.

15. Household appliance as claimed in claim 1, **characterized in that** it further comprises a perforated basket (30) rotatably and removably mounted in said sanitizing chamber (3), for holding the food therein throughout the sanitization cycle, and allowing removal of sanitized food at the end of the cycle.

16. Household appliance as claimed in claim 15, **characterized** it has an upper lid for hermetically sealing said sanitizing chamber (3), said lid (31) having a motor-driven disk (33) on its inner face, which is designed to fit onto the upper edge (35) of said basket (30) to drive it into rotation about a substantially vertical axis (X) and facilitate removal of any residual liquid from the food.

17. Household appliance as claimed in claim 1, **characterized in that** it has a disk-like plate (28) arranged on the bottom of said container (2), which plate has its upper face (29) at least partly coated with a layer of a material containing silver nanoparticles.

18. Household appliance as claimed in claim 4, **characterized in that** said control means (36) include a microprocessor unit implemented with a computer for controlling operation of said transfer means (9), said discharge means (6), said washing means (4) and said sterilization means (5).

## Patentansprüche

1. Haushaltsgerät zum Sterilisieren von Haushaltsmitteln mit
- einem Behälter (2), der eine offene, obere Sterilisierungskammer (3) bildet zur Aufnahme zu behandelnder Haushaltsmitteln und einer Reinigungsflüssigkeit,
- Spüleinrichtungen (4) zum Entfernen von Schmutzpartikeln auf den in die Flüssigkeit getauchten Haushaltsmitteln mittels Vibration,
- Sterilisationseinrichtungen (5) zum Reduzieren der Anzahl von Mikroben auf den Haushaltsmitteln nach dem Spülen,
- Auslasseinrichtungen (6) zum Ablassen der verbrauchten Flüssigkeit aus der Sterilisationskammer (3),**dadurch gekennzeichnet, dass** die Sterilisationseinrichtungen (5) einen separaten Tank (7) beinhalten zum Sammeln der sauberen Sterilisationsflüssigkeit, das dafür bestimmt ist automatisch in die Sterilisierungskammer (3) gespeist zu werden nur wenn der Anfangsspülschritt beendet ist, und die verbrauchte Reinigungsflüssigkeit wird automatisch abgelassen, um den Sterilierungsschritt nur mit sauberer Spülflüssigkeit zuzulassen.

2. Haushaltsgerät gemäß Anspruch 1, **dadurch gekennzeichnet, dass** es Übertragungseinrichtungen (9) umfasst zum Übertragen der sauberen Sterilisationsflüssigkeit in die Sterilisierungskammer (3).

3. Haushaltsgerät gemäß Anspruch 2, **dadurch gekennzeichnet, dass** die Übertragungseinrichtungen (9) einen ersten Hydraulikkreis (10) umfassen mit einer ersten Pumpe (11) mit einer Saugleitung (12) in Verbindung mit dem Tank (7) und einer Förderleitung (13), die mit der Sterilisierungskammer (3) verbunden ist.

4. Haushaltsgerät gemäß Anspruch 2, **dadurch gekennzeichnet, dass** Steuereinrichtungen (36) vorgesehen sind zur automatischen Steuerung von sowohl der Betätigung der Ablasseinrichtungen (6) als auch der Betätigung der Übertragungseinrichtungen (9) nur wenn die verbrauchte Spülflüssigkeit vollständig aus der Sterilisierungskammer (3) abgelassen ist.

5. Haushaltsgerät gemäß Anspruch 1, **dadurch gekennzeichnet, dass** der Tank (7) ein vorbestimmtes Volumen hat, das kleiner ist als das Volumen der Sterilisierungskammer (3) und vorzugsweise von ungefähr zwei Litern.

6. Haushaltsgerät gemäß Anspruch 1, **dadurch gekennzeichnet, dass** die Ablasseinrichtungen (6) einen zweiten Hydraulikkreis (14) umfassen mit einem Magnetventil (15) zum wahlweisen und automatischen Öffnen/Schließen des zweiten Kreises (14).

7. Haushaltsgerät gemäß Anspruch 1, **dadurch gekennzeichnet, dass** die Spüleinrichtungen (4) einen Frequenzgenerator (17) beinhalten, der außerhalb der Sterilisierungskammer (3) angeordnet ist, um darin Tonwellen einer vorbestimmten Frequenz zu erzeugen.

8. Haushaltsgerät gemäß Anspruch 7, **dadurch gekennzeichnet, dass** die vorbestimmte Frequenz aus einem Bereich der ultrasonischen Frequenzen ausgewählt ist und vorzugsweise ungefähr 40 kHz ist.

9. Haushaltsgerät gemäß Anspruch 1, **dadurch gekennzeichnet, dass** die Sterilisationseinrichtungen (5) einen dritten Kreis (19) umfassen, um eine Sterilisierungsflüssigkeit unter Druck in die Sterilisierungskammer (3) ein zu speisen.

10. Haushaltsgerät gemäß Anspruch 9, **dadurch gekennzeichnet, dass** die Sterilisierungsflüssigkeit mit Ozon angereicherte Luft ist, der dritte Kreis (19) eine zweite Pumpe (20) umfasst zum Ansaugen von Luft aus der äußeren Umgebung und einen Ozongenerator (22), der verbunden ist mit der Förderseite von der zweiten Pumpe(20).

11. Haushaltsgerät gemäß Anspruch 10, **dadurch gekennzeichnet, dass** der Ozongenerator (22) eine Ozonkammer bildet, die in Verbindung für Flüssigkeiten steht mit der Sterilisierungskammer (3).

12. Haushaltsgerät gemäß Anspruch 11, **dadurch gekennzeichnet, dass** der Ozongenerator (22) ein Hochstuf-Umformer ist, der geeignet ist, eine hohe Frequenz zu erzeugen und einen elektrischen Hochspannungsbogen in der Luft in der Kammer zum Anreichern mit Ozon.

13. Haushaltsgerät gemäß Anspruch 11, **dadurch gekennzeichnet, dass** der dritte Kreis (19) eine im wesentlichen ringförmige Diffusionskammer (23) umfasst, die unterhalb der Sterilisierungskammer (3) angeordnet ist, wobei die Diffusionskammer (23) eine erste Reihe von Öffnungen (24) aufweist, die in Verbindung für Flüssigkeiten stehen mit der Kammer zum Anreichern mit Ozon zum Ansaugen von mit Ozon angereicherter Luft von dort und eine zweite Reihe von Durchgangsöffnungen (25) aufweist, die in der Sterilisierungskammer (3) gebildet sind, um unter Druck mit Ozon angereicherte Luft da hinein einzuspeisen.

14. Haushaltsgerät gemäß einem der vorhergehenden Ansprüche, **dadurch gekennzeichnet, dass** die Sterilisierungseinrichtungen einen UV-Strahlen-Erzeuger beinhalten.

15. Haushaltsgerät gemäß Anspruch 1, **dadurch gekennzeichnet, dass** zudem ein gelöcherter Korb (30) vorgesehen ist, der dreh- und entfernbar in der Sterilisierungskammer (3) montiert ist, um die Haushaltsgeräte darin zu halten während des gesamten Sterilisierungsvorgangs und das Entfernen von sterilisiertem Haushaltsgerät am Ende des Vorgangs zulässt.

16. Haushaltsgerät gemäß Anspruch 15, **dadurch gekennzeichnet, dass** ein oberes Element vorgesehen ist zum hermetischen Verschließen der Sterilisierungskammer (3), wobei das Element (31) eine motorgetriebene Scheibe (33) an seiner inneren Seite aufweist, die so ausgestaltet ist, dass sie auf den oberen Rand (35) des Korbs (30) passt, um ihn um eine im wesentlichen vertikale Achse (X) in Drehung zu versetzen und Entfernen von verbleibender Flüssigkeit aus den Haushaltsmitteln zu erleichtern.

17. Haushaltsgerät gemäß Anspruch 1, **dadurch gekennzeichnet, dass** eine scheibenartige Platte (28) vorgesehen ist, die am Boden des Behälters (2) angeordnet ist, wobei die obere Seite (29) der Platte zumindest teilweise beschichtet ist mit einer Schicht eines Materials, das Silber-Nanopartikel enthält.

18. Haushaltsgerät gemäß Anspruch 4, **dadurch gekennzeichnet, dass** die Steuereinrichtungen (36) eine MikroprozessorEinheit umfassen, die eingerichtet ist mit einem Computer zum Steuern des Betriebs der Übertragungseinrichtungen (9), der Ablasseinrichtungen (6), der Spüleinrichtungen (4) und der Sterilisierungseinrichtungen (5).

## Revendications

1. Appareil ménager destiné à décontaminer des aliments, comprenant :
- un récipient (2) qui définit une chambre de décontamination (3) ouverte en haut destinée à recevoir les aliments à traiter et un liquide de lavage ;
- des moyens de lavage (4) destinés à éliminer par vibration les impuretés particulaires des aliments immergés dans le liquide ;
- des moyens de stérilisation (5) destinés à réduire les décomptes microbiens présents sur les aliments après le lavage ;
- des moyens de décharge (6) destinés à évacuer le liquide de lavage usé de la chambre de décontamination (3),
**caractérisé en ce que** lesdits moyens de stérilisation (5) comprennent une cuve séparée (7) destinée à collecter le liquide de stérilisation propre qui est destiné à être introduit automatiquement dans ladite chambre de décontamination (3) seulement lorsque l'étape de lavage initiale est terminée et que le liquide de lavage usé est automatiquement évacué, afin de ne laisser l'étape de stérilisation s'effectuer qu'avec du liquide propre.

2. Appareil ménager selon la revendication 1, **caractérisé en ce qu'**il comprend des moyens de transfert (9) destinés à transférer le liquide de stérilisation propre dans ladite chambre de décontamination (3).

3. Appareil ménager selon la revendication 2, **caractérisé en ce que** lesdits moyens de transfert (9) comprennent un premier circuit hydraulique (10) ayant une première pompe (11) munie d'un tuyau d'aspiration (12) en communication avec ladite cuve (7) et d'un tuyau de refoulement (13) relié à ladite chambre de décontamination (3).

4. Appareil ménager selon la revendication 2, **caractérisé en ce qu'**il comprend des moyens de commande (36) destinés à commander automatiquement aussi bien l'actionnement desdits moyens de décharge (6) que l'actionnement desdits moyens de transfert (9) seulement lorsque le liquide de lavage usé a été entièrement évacué de ladite chambre de décontamination (3).

5. Appareil ménager selon la revendication 1, **caractérisé en ce que** ladite cuve (7) a une capacité prédéterminée inférieure à la capacité de ladite chambre de décontamination (3) et de préférence égale à environ 2 litres.

6. Appareil ménager selon la revendication 1, **caractérisé en ce que** lesdits moyens de décharge (6) comprennent un second circuit hydraulique (14) muni d'une électrovanne (15) destinée à ouvrir et fermer sélectivement et automatiquement ledit second circuit (14).

7. Appareil ménager selon la revendication 1, **caractérisé en ce que** lesdits moyens de lavage (4) comprennent un générateur de fréquence (17) placé à l'extérieur de ladite chambre de décontamination (3) pour générer dans cette chambre des ondes sonores d'une fréquence prédéterminée.

8. Appareil ménager selon la revendication 7, **caractérisé en ce que** ladite fréquence prédéterminée est choisie dans la gamme des fréquences ultrasonores et est de préférence d'environ 40 kHz.

9. Appareil ménager selon la revendication 1, **caractérisé en ce que** lesdits moyens de stérilisation (5) comprennent un troisième circuit (19) destiné à l'introduction forcée d'un fluide stérilisant dans ladite chambre de décontamination (3).

10. Appareil ménager selon la revendication 9, **caractérisé en ce que** ledit fluide stérilisant est de l'air ozonisé, ledit troisième circuit (19) comprenant une seconde pompe (20) destinée à aspirer de l'air en provenance de l'environnement extérieur et un générateur d'ozone (22) relié au côté de refoulement de ladite seconde pompe (20).

11. Appareil ménager selon la revendication 10, **caractérisé en ce que** ledit générateur d'ozone (22) définit une chambre d'ozonisation qui est en communication fluidique avec ladite chambre de décontamination (3).

12. Appareil ménager selon la revendication 11, **caractérisé en ce que** ledit générateur d'ozone (22) est un transformateur élévateur adapté pour générer une haute fréquence et un arc électrique à haute tension dans l'air présent dans ladite chambre d'ozonisation.

13. Appareil ménager selon la revendication 11, **caractérisé en ce que** ledit troisième circuit (19) comprend une chambre de diffusion sensiblement annulaire (23) disposée sous ladite chambre de décontamination (3), ladite chambre de diffusion (23) ayant une première série de trous (24) en liaison fluidique avec ladite chambre d'ozonisation pour aspirer de l'air ozonisé en provenance de celle-ci et une seconde série de trous débouchants (25) formés dans ladite chambre de décontamination (3) pour introduire de l'air ozonisé en force dans cette dernière.

14. Appareil ménager selon une quelconque des revendications précédentes, **caractérisé en ce que** lesdits moyens de stérilisation comprennent un générateur de rayons UV.

15. Appareil ménager selon la revendication 1, **caractérisé en ce qu'**il comprend en outre un panier perforé (30) monté rotatif et amovible dans ladite chambre de décontamination (3) pour maintenir les aliments dans cette chambre pendant tout le cycle de décontamination et permettre de retirer les aliments décontaminés à la fin du cycle.

16. Appareil ménager selon la revendication 15, **caractérisé en ce qu'**il présente un couvercle supérieur destiné à fermer hermétiquement ladite chambre de décontamination (3), ledit couvercle (31) ayant sur sa face intérieure un disque (33) entraîné par un moteur, qui est conçu pour s'ajuster sur le bord supérieur (35) dudit panier (30) afin de l'entraîner en rotation autour d'un axe sensiblement vertical (X) et de faciliter l'élimination du liquide résiduel éventuel des aliments.

17. Appareil ménager selon la revendication 1, **caractérisé en ce qu'**il présente une plaque (28) en forme de disque disposée sur le fond dudit récipient (2), laquelle plaque a sa face supérieure (29) au moins partiellement revêtue d'une couche d'une matière contenant des nanoparticules d'argent.

18. Appareil ménager selon la revendication 4, **caractérisé en ce que** lesdits moyens de commande (36) comprennent une unité formant microprocesseur équipée d'un calculateur destiné à commander le fonctionnement desdits moyens de transfert (9), desdits moyens de décharge (6), desdits moyens de lavage (4) et desdits moyens de stérilisation (5).
